# EUROPEAN PATENT APPLICATION

(11) **EP 3 048 571 A1**
(43) Date of publication of application: **27.07.2016**
(21) Application number: 14845168.5
(22) Date of filing: 18.07.2014
(51) Int. Cl.: G06Q 30/00

(54) **TAG DATA APPLICATION METHOD AND APPARATUS**

(30) Priority: 18.09.2013 CN 201310430210
(71) Applicant: Qu, Lidong, Beijing 100088 (CN)
(72) Inventor: Qu, Lidong, Beijing 100088 (CN)
(74) Representative: Szabo, Zsolt
(86) International application number: PCT/CN2014/082553
(87) International publication number: WO 2015/039491

(57) **Abstract**

The present invention relates to a method and a device for applying tag data, and belongs to the technical field of computer application. In this method, after the user terminal acquires tag data, parses the tag data so as to obtain an application business corresponding to the tag data and a set of service information and/or function information contained in the application business, then interacts with respective target servers corresponding to the set of service information and/or function information, respectively, so as to achieve corresponding services and/or corresponding functions, to complete the application business. With the method and the device for applying tag data of the present invention, for the user terminal interacts directly with target servers corresponding to services and/or functions contained in the application business, each function of a large-scale application can be distributed to be achieved in the interactions with a number of target servers, which effectively simplifies the function realization mode of the tag data in the large-scale application, reduces the cost of application service providers building servers, to make the application ways of the tag data more, provide better user experience, and the application mode of the present invention is simple and convenient, the cost is relatively low.

## Description

### Field of Technology

The present invention relates to the technical field of computer application, especially to the technical field of data encoding application, in particular to a method and a device for applying tag data.

### Description of Related Arts

After two-dimensional code was developed, it was applied firstly and widely in fields such as logistics and operations management, identification card management, and so on, due to its characteristics such as large information capacity, high security, high rate of data retrieval, and error correction ability.

With the popularity of smart phones, the two-dimensional code gets new applications in the Object-to-Object (OTO) field, such as information acquisition, mobile shopping, commodity anti-counterfeiting, identity authentication, coupon distribution, and so on, by use of the merits of the two-dimensional code being a cross-media channel, the smart phones connecting to the internet in real time, and the two-dimensional code being captured by cameras.

The applications of the current mobile two-dimensional code in the OTO field focus mainly on providing access convenience in e-commerce; it still lacks in-depth applications.

The reason is that, in the existing two-dimensional code applications, the code issuing server needs to integrate all application processes of the two-dimensional code issued, so as to ensure the smooth use of the two-dimensional code. This results in that a lot of human and financial investments are required to achieve the integration of various stages, and generate a two-dimensional code covering all functions of a large-scale application in a relatively complex application environment, which hinders the applications of the two-dimensional code in large and complete business models. Therefore, how to simplify the function realization mode of the large-scale application, to make the two-dimensional code be capable of being applied better in a variety of application ways and provide better user experience, becomes an urgent problem to be solved in the two-dimensional code application field.

### Summary of the Invention

In order to overcome the above mentioned shortcomings of the prior art, one object of the present invention is to provide a method and a device for applying tag data, which can effectively simplify the function realization mode of tag data in a large-scale application, to make the application ways of the tag data more and provide better user experience, and has simple and convenient application modes and low application costs.

In order to realize the above object, in a first aspect of the present invention, a method for applying tag data is provided, and comprises the following steps:
(1) acquiring tag data and parsing the tag data with a user terminal, so as to obtain an application business corresponding to the tag data and a set of service information and/or function information contained in the application business, wherein the service information and the function information correspond to respective target servers respectively;
(2) interacting the user terminal with the respective target servers corresponding to the set of service information and/or function information, respectively, so as to achieve corresponding services and/or corresponding functions, to complete the application business.

In the method for applying tag data, the step (1) comprises the following steps in details:
(11) acquiring the tag data from a code issuing server and parsing the tag data with the user terminal, so as to obtain information about the application business corresponding to the tag data;
(12) obtaining from the code issuing server the set of service information and/or function information corresponding to the application business, and information about the respective target servers corresponding to the service information and the function information respectively, with the user terminal according to the information about the application business.

In the method for applying tag data, the service information and the function information include corresponding service software development kits and corresponding function software development kits respectively, the service software development kits and the function software development kits include information about their respective target servers respectively, including server interfaces, parameters and protocol information.

In the method for applying tag data, the step (2) comprises the following steps in details:
(21) selecting several or all in the set of service information and/or function information with the user terminal according to user operations;
(22) interacting the user terminal with each target server corresponding to the service information and/or the function information selected, respectively, so as to achieve the corresponding services and/or the corresponding functions, to complete the application business.

In the method for applying tag data, the step "interacting the user terminal with each target server corresponding to the service information and/or the function information selected, respectively" comprises the following steps in details:
determining with the user terminal whether the order of implementing the service information and/or the function information selected is a parallel order or a sequential order;
interacting synchronously the user terminal with the each target server corresponding to the service information and/or the function information in the parallel order, respectively, and interacting sequentially the user terminal with the each target server corresponding to the service information and/or the function information in the sequential order, respectively.

In a second aspect of the present invention, a device for applying tag data is provided, and includes a user terminal which comprises a tag data acquisition module, a tag data parsing module and an interaction control module. Wherein, the tag data acquisition module is used to acquire tag data, and store the tag data acquired; the tag data parsing module is used to parse the tag data, so as to obtain an application business corresponding to the tag data and a set of service information and/or function information contained in the application business; and the interaction control module is used to interact with respective target servers corresponding to the set of service information and/or function information, respectively, so as to achieve corresponding services and/or corresponding functions, to complete the application business.

In the device for applying tag data, it further includes a code issuing server, used to issue the tag data according to the application business and provide the tag data to the user terminal; and further provide information about the respective target servers corresponding to the service information and the function information respectively to the user terminal.

In the device for applying tag data, the code issuing server stores an application business list, which includes service information and function information corresponding to each application business, and information about target servers corresponding to the service information and the function information, including service interfaces, parameters and protocol information.

In the device for applying tag data, the user terminal is a wired terminal or a wireless terminal, and the code issuing server is connected with the user terminal via a network.

In the device for applying tag data, the user terminal further comprises a selection control module, used to select several or all in the set of service information and/or function information according to user operations.

In the device for applying tag data, the user terminal further comprises an order control module, used to determine whether the order of implementing the service information and/or the function information selected is a parallel order or a sequential order.

In the method and the device for applying tag data of the present invention, after the tag data acquisition module in the user terminal acquires tag data; the tag data parsing module parses the tag data so as to obtain an application business corresponding to the tag data and a set of service information and/or function information contained in the application business; then the interaction control module interacts with respective target servers corresponding to the set of service information and/or function information, respectively, so as to achieve corresponding services and/or corresponding functions, to complete the application business. With the method and the device for applying tag data of the present invention, for when the user terminal achieves the application business of the tag data, it interacts directly with target servers corresponding to services and/or functions contained in the application business, and avoids the interaction with a server providing the whole application business, each function of a large-scale application can be distributed to be achieved in the interactions with a number of target servers, which effectively simplifies the function realization mode of the tag data in the large-scale application, reduces the cost of application service providers building servers, to make the application ways of the tag data more, provide better user experience, and the application mode of the method for applying tag data is simple and convenient, the cost of the device for applying tag data is relatively low.

These and other objects, characteristics and advantages of the present invention will be elaborated sufficiently through the following detailed description, the drawings and the claims, and can be achieved with the means, the devices and their combinations particularly pointed out in the appended claims.

### Brief Description of the Drawings

Fig. 1 shows a flow chart of the steps of the method for applying tag data of the present invention.
Fig. 2 shows a schematic view of the device for applying tag data of the present invention in practical applications.

### Detailed Description of the Preferred Embodiment

In order to understand the technical content of the present invention clearly, the present invention is further exemplified by reference to the following examples.

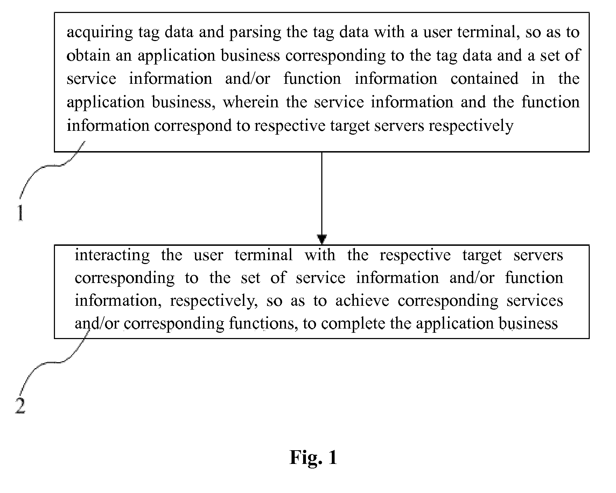

Please refer to Fig. 1, which shows a flow chart of the steps of the method for applying tag data of the present invention.

In one embodiment, the method for applying tag data is as shown in Fig. 1, and comprises the following steps:
(1) acquiring tag data with a user terminal, the tag data can a bar code such as a one-dimensional code, a two-dimensional code, or a three-dimensional code, etc., or also can be RFID near field communication information acquired from a RFID tag, and then parsing the tag data with the user terminal, so as to obtain an application business corresponding to the tag data and a set of service information and/or function information contained in the application business, wherein the service information and the function information correspond to respective target servers respectively;
(2) interacting the user terminal with the respective target servers corresponding to the set of service information and/or function information, respectively, so as to achieve corresponding services and/or corresponding functions, to complete the application business.

In a relatively preferred embodiment, the step (1) comprises the following steps in details:
(11) acquiring the tag data from a code issuing server and parsing the tag data with the user terminal, so as to obtain information about the application business corresponding to the tag data;
(12) obtaining from the code issuing server the set of service information and/or function information corresponding to the application business, and information about the respective target servers corresponding to the service information and the function information respectively, with the user terminal according to the information about the application business.

In a further preferred embodiment, the service information and the function information include corresponding service software development kits and corresponding function software development kits respectively, the service software development kits and the function software development kits include information about their respective target servers respectively, including server interfaces, parameters and protocol information.

In another relatively preferred embodiment, the step (2) comprises the following steps in details:
(21) selecting several or all in the set of service information and/or function information with the user terminal according to user operations;
(22) interacting the user terminal with each target server corresponding to the service information and/or the function information selected, respectively, so as to achieve the corresponding services and/or the corresponding functions, to complete the application business.

In a more preferred embodiment, the step "interacting the user terminal with each target server corresponding to the service information and/or the function information selected, respectively" comprises the following steps in details:
determining with the user terminal whether the order of implementing the service information and/or the function information selected is a parallel order or a sequential order;
interacting synchronously the user terminal with the each target server corresponding to the service information and/or the function information in the parallel order, respectively, and interacting sequentially the user terminal with the each target server corresponding to the service information and/or the function information in the sequential order, respectively.

The present invention further provides a device for applying tag data. In one embodiment, the device includes a user terminal, which can be a smart phone with camera or a PAD tablet, or a hand-held scanner with a scanning function or a RFID sensing device. Particularly, the user terminal comprises a tag data acquisition module, a tag data parsing module and an interaction control module. Wherein, the tag data acquisition module is used to acquire tag data, and store the tag data acquired; the tag data parsing module is used to parse the tag data, so as to obtain an application business corresponding to the tag data and a set of service information and/or function information contained in the application business; and the interaction control module is used to interact with respective target servers corresponding to the set of service information and/or function information, respectively, so as to achieve corresponding services and/or corresponding functions, to complete the application business.

In a relatively preferred embodiment, the device for applying tag data further includes a code issuing server, used to issue the tag data according to the application business and provide the tag data to the user terminal; and further provide information about the respective target servers corresponding to the service information and the function information respectively to the user terminal. The user terminal is a wired terminal or a wireless terminal, and the code issuing server is connected with the user terminal via a network.

In a further preferred embodiment, the code issuing server stores an application business list, which includes service information and function information corresponding to each application business, and information about target servers corresponding to the service information and the function information, including service interfaces, parameters and protocol information.

In another relatively preferred embodiment, the user terminal further comprises a selection control module, used to select several or all in the set of service information and/or function information according to user operations.

In a more preferred embodiment, the user terminal further comprises an order control module, used to determine whether the order of implementing the service information and/or the function information selected is a parallel order or a sequential order.

Two embodiments of the method and the device for applying tag data of the present invention in practical applications are further illustrated as follows:

### Embodiment 1: Operation of placing an order using tag data

When shopping in a store, one consumer can use a mobile phone to take a picture of tag data such as a two-dimensional code on a commodity, parse the two-dimensional code through an APP installed in the mobile phone to obtain the application business of the two-dimensional code to place an order for the commodity, at the same time can obtain service information and function information including commodity information inquiry, location, logistics inquiry, shopping mode selection, order, fee payment and so on.

Specifically, at first the APP of the mobile phone connects to the server for maintaining commodity information through a mobile wireless network , acquires the commodity information and displays it on the mobile phone; and then the location of the consumer and the position relationship between the consumer and the commodity producer and the storage warehouse are determined through a location server, and logistics information for the user to place an order through the network to buy the commodity is provided; the shopping mode selection server integrates the commodity information and the logistics information, and provides price information under different purchasing modes to the consumer to select, when the user confirms the purchasing mode, if the purchasing mode is spot purchasing, an order server will transfer the order information to the store to achieve the purchasing, if the purchasing mode is online purchasing, the order server will transfer the order information to the commodity producer and the logistics company; finally, the consumer completes the payment by connecting the payment server with the mobile phone via the wireless network, so as to achieve the whole process of purchasing the commodity. Of course, such a two-dimensional code for placing an order can also be printed directly on advertisements on all kinds of newspapers and magazines, consumers can complete the operation of placing an order by taking a picture of the two-dimensional code on each of the advertisements.

Thus, in generating the two-dimensional code for placing an order of the commodity, it only needs to include information about each target server corresponding to each service or each function in the corresponding SDK (software development kit), the user terminal can interact with each target server after parsing the two-dimensional code to achieve the function of placing an order for the commodity, so as to decompose a general order server, refine the whole application mode of the two-dimensional code, make the combinations of services and functions more flexible, and the cost also lower.

### Embodiment 2: TV set-top boxes

With the popularity of pay-high-definition television, TV set-top boxes become common household electronic devices and at the same time are used in various high-grade guesthouses and hotels. Watching pay HD programs typically require users to pay a fee. However, the right to watch pay HD programs is tied to a specific TV set-top box. It is difficult for a user to watch the pay HD programs on another TV set-top box. Moreover, another application difficulty is how to allow users to complete a quick payment under the condition of a short term use in hotels and guesthouses.

The method and the device for applying tag data of the present invention enable tag data such as a two-dimensional code to be displayed on TV after the TV set-top box is turned on. A user can take a picture of the two-dimensional code using a mobile phone. The mobile phone can parse the two-dimensional code, obtain the application business of the two-dimensional code for the pay TV, and at the same time can obtain service information and function information such as authentication, permissions, payment, and so on.

First, the two-dimensional code includes information about an authentication target server. Through connecting to the authentication server, the user can authenticate his or her identification, and after the login or the registration is completed, the user confirms his or her right through information about an authorization server. If the user has purchased the pay TV service, the authorization server sends right-to-use confirmation information, via a network, to the TV set-top box, then the user can watch pay TV programs by separating the right-to-use of pay TV from the set-top box, a consumer can watch pay TV programs on any set-top box. If the user has not purchased a pay TV service, the user can pay for the pay TV service using the purchase information of the two-dimensional code to connect to the pay server through his or her mobile phone, which simplifies the process of the user purchasing a pay TV service, and facilitates a short-term use in hotels and guesthouses.

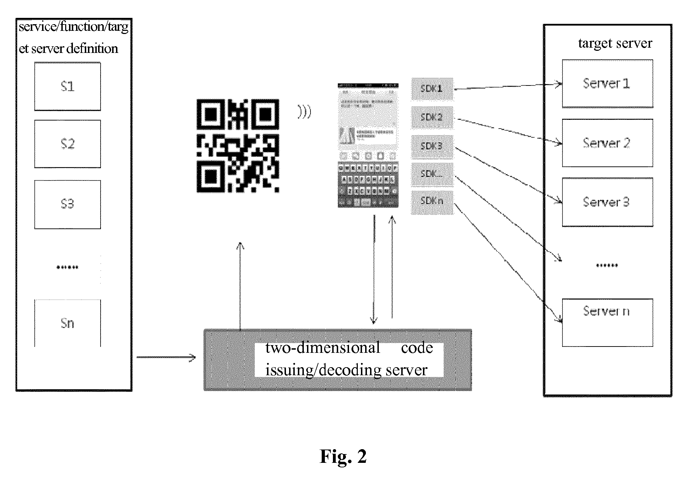

It can be seen from the above examples that, as shown in Fig. 2, the two dimensional code application device of the present invention can include a service definition server, a two-dimensional code issuing/decoding server, a two-dimensional code released on the electronic/paper media, a reader APP in an intelligent terminal, a service providing server. The OTO service definition, integration and collaboration are achieved, thus changing the service providing organization form, achieving the cross-organization instant cooperation of the service, which can enable the flexibility of the service combinations, the grain refinement of the service units, the automation of the service cooperations.

In addition, the data tag as a data carrier can be divided into two kinds of bar code and RFID, when bar code information and RFID information are acquired, one form is to transfer the information to the parsing server after the information is acquired, to parse contained service/function, which will be returned to and listed in the APP in the intelligent terminal (as shown in Fig. 2, the intelligent terminal acquires the information, different parsing servers parse the information); another form is to just list the information in the APP, for the information contains the service/the function, and does not need to be parsed by the parsing servers.

The main features of the present invention are listed as follows:
1. Unified encoding rules for tag data. A code issuing server generates tag data information according to services/functions provided/received, wherein the tag data information can be retrieved by an APP on an intelligent terminal.
2. Tag data retrieved by the intelligent terminal are defined by the combination of the tag data issuing server and the intelligent user terminal, the service providing servers, and the service collaborative manners.
3. A tag data parsing server parses the tag data retrieved by the intelligent terminal, and provides SDKs of related servers/services in the APP of the intelligent terminal.
4. The tag data contain all services/functions provided/received, which are provided to a user to choose in the APP of the intelligent terminal, so as to interact with target servers, to accomplish action trigger and service cooperations of the combinations of services/servers.

The present invention has one or more of the following advantages in practical applications:
1. Flexibility of service combinations. Services can be flexibly combined and coordinated in response to code scanning by a user and user defined service combinations; tag data link different servers through different SDKs based on services/target servers, and service collaborative manners, assuring service coordination and in-depth specialization and optimization of social division of labor, as well as making the service provider flexible.
2. User friendly experiences. Through the tag data, the friendliness of the user interface is improved and user operability; through the service combinations, a user can select corresponding services in an APP according to the requirement, which improves the friendliness of the user operations.
3. In-depth utilization of service combinations increases the system security by separating services such as authentication, payment, logistics, and so on.

In the method and the device for applying tag data of the present invention, after the tag data acquisition module in the user terminal acquires tag data; the tag data parsing module parses the tag data so as to obtain an application business corresponding to the tag data and a set of service information and/or function information contained in the application business; then the interaction control module interacts with respective target servers corresponding to the set of service information and/or function information, respectively, so as to achieve corresponding services and/or corresponding functions, to complete the application business. With the method and the device for applying tag data of the present invention, for when the user terminal achieves the application business of the tag data, it interacts directly with target servers corresponding to services and/or functions contained in the application business, and avoids the interaction with a server providing the whole application business, each function of a large-scale application can be distributed to be achieved in the interactions with a number of target servers, which effectively simplifies the function realization mode of the tag data in the large-scale application, reduce the cost of application service providers building servers, to make the application ways of the tag data more, provide better user experience, and the application mode of the method for applying tag data is simple and convenient, the cost of the device for applying tag data is relatively low.

In the present specification, the present invention has been described with specific examples. However, it should be noted that various modifications and variations may be made without departing from the spirit and scope of the invention. Accordingly, the specification and drawings are to be regarded for illustrative rather than restrictive purposes.

## Claims

1. A method for applying tag data, comprising the following steps:
(1) acquiring tag data and parsing the tag data with a user terminal, so as to obtain an application business corresponding to the tag data and a set of service information and/or function information contained in the application business, wherein the service information and the function information correspond to respective target servers respectively;
(2) interacting the user terminal with the respective target servers corresponding to the set of service information and/or function information, respectively, so as to achieve corresponding services and/or corresponding functions, to complete the application business.

2. The method for applying tag data of claim 1, wherein the step (1) comprises the following steps in details:
(11) acquiring the tag data from a code issuing server and parsing the tag data with the user terminal, so as to obtain information about the application business corresponding to the tag data;
(12) obtaining from the code issuing server the set of service information and/or function information corresponding to the application business, and information about the respective target servers corresponding to the service information and the function information respectively, with the user terminal according to the information about the application business.

3. The method for applying tag data of claim 2, wherein the service information and the function information include corresponding service software development kits and corresponding function software development kits respectively, the service software development kits and the function software development kits include information about their respective target servers respectively, including server interfaces, parameters and protocol information.

4. The method for applying tag data of claim 1, wherein the step (2) comprises the following steps in details:
(21) selecting several or all in the set of service information and/or function information with the user terminal according to user operations;
(22) interacting the user terminal with each target server corresponding to the service information and/or the function information selected, respectively, so as to achieve the corresponding services and/or the corresponding functions, to complete the application business.

5. The method for applying tag data of claim 4, wherein the step "interacting the user terminal with each target server corresponding to the service information and/or the function information selected, respectively" comprises the following steps in details:
determining with the user terminal whether the order of implementing the service information and/or the function information selected is a parallel order or a sequential order;
interacting synchronously the user terminal with the each target server corresponding to the service information and/or the function information in the parallel order, respectively, and interacting sequentially the user terminal with the each target server corresponding to the service information and/or the function information in the sequential order, respectively.

6. A device for applying tag data, including a user terminal which comprises:
a tag data acquisition module, used to acquire tag data, and store the tag data acquired;
a tag data parsing module, used to parse the tag data, so as to obtain an application business corresponding to the tag data and a set of service information and/or function information contained in the application business; and
an interaction control module, used to interact with respective target servers corresponding to the set of service information and/or function information, respectively, so as to achieve corresponding services and/or corresponding functions, to complete the application business.

7. The device for applying tag data of claim 6, wherein the device for applying tag data further includes:
a code issuing server, used to issue the tag data according to the application business and provide the tag data to the user terminal; and further provide information about the respective target servers corresponding to the service information and the function information respectively to the user terminal.

8. The device for applying tag data of claim 7, wherein the code issuing server stores an application business list, which includes service information and function information corresponding to each application business, and information about target servers corresponding to the service information and the function information, including service interfaces, parameters and protocol information.

9. The device for applying tag data of claim 7 or claim 8, wherein the user terminal is a wired terminal or a wireless terminal, and the code issuing server is connected with the user terminal via a network.

10. The device for applying tag data of claim 6, wherein the user terminal further comprises:
a selection control module, used to select several or all in the set of service information and/or function information according to user operations.

11. The device for applying tag data of claim 9, wherein the user terminal further comprises:
an order control module, used to determine whether the order of implementing the service information and/or the function information selected is a parallel order or a sequential order.
